# EUROPEAN PATENT SPECIFICATION

(11) **EP 2 945 050 B1**
(45) Date of publication and mention of the grant of the patent: **05.05.2021**
(21) Application number: 14168346.6
(22) Date of filing: 14.05.2014
(51) Int. Cl.: G06F 3/06

(54) **Deduplication in a storage system**
Deduplizierung in einem Speichersystem
Déduplication dans un système de stockage

(43) Date of publication of application: 18.11.2015
(73) Proprietor: THE SILK TECHNOLOGIES ILC LTD., 2069206 Yokne'am Ilit (IL)
(72) Inventor: Tal, Doron, Geva Carmel 3085500 (IL); Gordon, Eyal, Haifa 3491777 (IL)
(74) Representative: Taor, Simon Edward William

(56) References cited:
- US-A1- 2013 060 739
- US-A1- 2014 006 354

## Description

### Deduplication in a Storage System

The present invention is in the field of storage systems and relates to managing data in a storage system that implements deduplication.

United States patent application US 2013/0060739 discloses transforming a file having at least one undeduplicated portion into a fully deduplicated file. For each of the at least one undeduplicated portion, a deduplication mechanism defines at least one chunk between file offsets associated with the at least one undeduplicated portion. Chunk boundaries associated with the at least one chunk are stored within deduplication meta-data. The deduplication mechanism aligns the at least one deduplicated portion of the file. Then, the at least one chunk is committed to a chunk store.

US 20140006354 discloses a technique for executing a cloud command for a distributed filesystem. Two or more cloud controllers collectively manage distributed filesystem data that is stored in one or more cloud storage systems; the cloud controllers ensure data consistency for the stored data, and each cloud controller caches portions of the distributed filesystem. During operation, a cloud controller presents a distributed-filesystem-specific capability to a client system as a file in the distributed filesystem (e.g., using a file abstraction). Upon receiving a request from the client system to access and/or operate upon this file, the client controller executes an associated cloud command.

The scope of the present invention is defined by the appended claims alone.

In order to understand the invention and to see how it may be carried out in practice, examples not covered by the claimed invention as well as embodiments will now be described, by way of non-limiting example only, with reference to the accompanying drawings, in which:
FIG. 1 is a block diagram illustration of a storage system according to examples of the presently disclosed subject matter;
FIG. 2 is an expanded view of the IO handler according to examples of the presently disclosed subject matter;
FIG. 3 is a high-level block diagram illustration of a distributed implementation of a distributed storage system that supports deduplication according to examples of the presently disclosed subject matter;
FIG. 4 is a flow chart illustration of a method according to examples of the presently disclosed subject matter;
FIG. 5 is a flow chart illustration of an implementation of a method under certain circumstances, according to examples of the presently disclosed subject matter;
FIG.6 is a flow chart illustration of an implementation of a method under certain circumstances, according to examples of the presently disclosed subject matter;
FIG.7 is a flow chart illustration of an implementation of a method under certain circumstances, according to examples of the presently disclosed subject matter;
FIG.8 is a flow chart illustration of an implementation of a method under certain circumstances, according to examples of the presently disclosed subject matter;
FIG.9 is a graphical chart diagram illustration of the state of a virtual address database and the state of the deduplication database following the processing of four different write requests according to examples of the presently disclosed subject matter;
FIG.10 is a flow chart illustration of a read flow which can be implemented as part of some examples of the presently disclosed subject matter; and
FIG.11 is a flow chart illustration of a garbage collection process which can be implemented as part of some examples of the presently disclosed subject matter.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

In the following detailed description, numerous specific details are set forth in order to provide a thorough understanding of the presently disclosed subject matter. However, it will be understood by those skilled in the art that the presently disclosed subject matter may be practiced without these specific details. In other instances, well-known methods, procedures and components have not been described in detail so as not to obscure the presently disclosed subject matter.

Unless specifically stated otherwise, as apparent from the following discussions, it is appreciated that throughout the specification discussions various functional terms refer to the action and/or processes of a computer or computing device, or similar electronic computing device, that manipulate and/or transform data represented as physical, such as electronic, quantities within the computing device's registers and/or memories into other data similarly represented as physical quantities within the computing device's memories, registers or other such tangible information storage, transmission or display devices.

Throughout the description and the claims, reference is made to the term "logical unit volume" or "LU volume" in abbreviation. The term LU volume (or logical unit volume) is known in the art of digital storage, and the following definition is provided as a non-limiting example only for convenience purposes. Accordingly, the interpretation of the term LU volume in the claims, unless stated otherwise, is not limited to the definitions below and the term LU volume should be given its broadest reasonable interpretation. The term LU volume as used herein relates to a logical unit created by a volume create request or an equivalent request. For example, in the SCSI storage protocol, an LU volume is created by such a volume create request.

The term "logical block address" or "LBA" in abbreviation as used herein, relates to the basic reference unit which is used by external hosts to address IO requests to the storage system. LBAs can be numerical and range from 1-n. A partly or an entirely overlapping LBA range (e.g., 1-n) can be used with multiple, different volumes (e.g., all the volumes) in the storage system, and therefore in order to reference a specific logical block, a reference to the volume with which the logical block or snapshot layer chunk is associated may be required. For simplicity, in the description of examples of the presently disclosed subject matter the IO requests reference LBA and the existence of multiple volumes in the storage system is not mentioned. It would be appreciated, that this omission is made with the intention of simplifying the description of the examples of the presently disclosed subject matter, and is not intended to limit the scope of the description. Therefore, it would be appreciated that examples of the presently disclosed subject matter encompass a multi-volume storage system and that the LBAs which are referred to herein can be comprised of a combination of an LBA and a volume ID (e.g., LU number).

It should be appreciated that the above addressing scheme is merely one possible implementation of an addressing scheme and is used herein by way of example only, and in further examples of the presently disclosed subject matter, different addressing schemes may be used. For example, in a different addressing scheme, each volume in the storage system can be associated with a different range of LBAs, and in such a case there is no need to reference the volume ID when referring to LBAs.

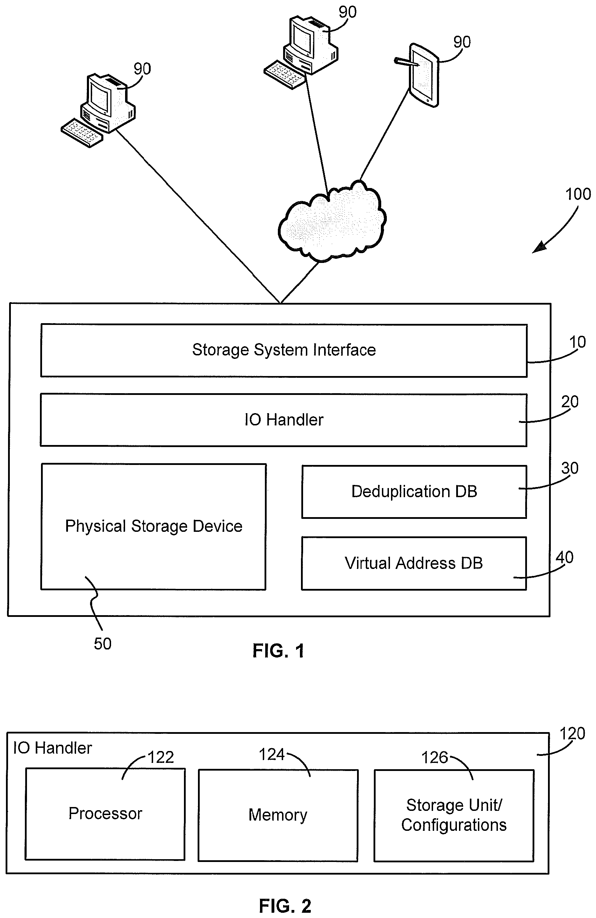

Reference is initially made to FIG. 1 which is a block diagram illustration of a storage system according to examples of the presently disclosed subject matter. According to examples of the presently disclosed subject matter, the storage system can be configured to store data and to provide storage services to one or more hosts 90 which can be connected to the storage system 100 directly or through a network (e.g., over the Internet). The storage system 100 can include an interface 10 for supporting communications with the external hosts 90. For example, the interface 10 can receive IO requests from the hosts and can assign the IO requests to the appropriate components of the storage system 100.

The storage system 100 can further include an IO handler 20, a deduplication database 30, a virtual address database 40 and a physical storage device 50. The configurations and operations which are implemented or carried out by each of the IO handler 20, the deduplication database 30, the virtual address database 40 and the physical storage device 50 according to examples of the presently disclosed subject matter, are provided below.

FIG. 2, to which reference is now made, is an expanded view of the IO handler according to examples of the presently disclosed subject matter. According to examples of the presently disclosed subject matter, the IO handler 120 can include a processor 122, a memory 124 and a storage unit 126 which stores the configurations or logic which are used by the IO handler 120. According to examples of the presently disclosed subject matter, the processor 122, a memory 124 and a storage unit 126 are utilized by the IO handler 120 to perform the operations which are carried out by the IO handler 120 according to the examples of the presently disclosed subject matter.

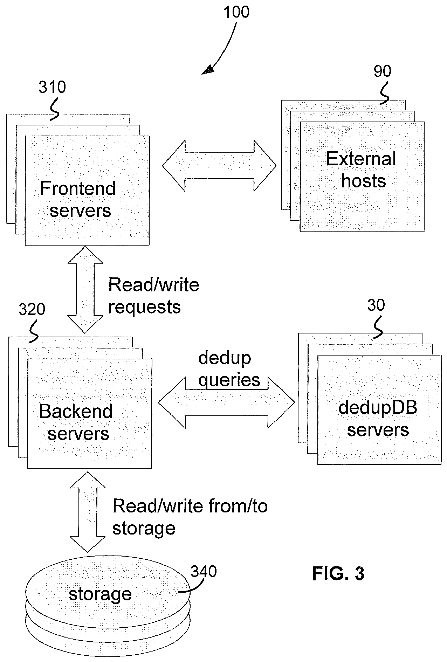

Reference is now additionally made to FIG. 3, which is a high-level block diagram illustration of a distributed implementation of a distributed storage system that supports deduplication according to examples of the presently disclosed subject matter. According to examples of the presently disclosed subject matter, the distributed storage system 100 can include a plurality of front end servers 310, a plurality of back end servers 320, a plurality of deduplication database servers 30 and a plurality of storage devices 340. It would be appreciated that, according to examples of the presently disclosed subject matter, each of: the front end servers 310, the backend servers 320 and the deduplication database servers 30 can be implemented as services running on computer hardware, and that each of: the front end servers 310, the backend servers 320 and the deduplication database servers 30 can run on a single computer hardware unit or can be distributed across a plurality of discrete computer hardware units.

According to examples of the presently disclosed subject matter, the logical address space of the storage system 100 can partitioned so that for every logical address, there is at least one backend server 320 which is responsible for it. Further by way of example, there is a certain range or space of possible hash value which can be computed for write data in the system, and the range or space of possible hash value can be partitioned such that for any (possible) hash value there is at least one deduplication database server 40 which is responsible for it. Further by way of example, frontend 310 and backend 320 servers can hold a translation tables or implement translation functions which map from logical address to the backend server which is responsible for that address. Still further by way of example, backend servers 320 also hold a table or implement a translation function which maps from virtual address (which will be described below) to the deduplication database server 30 which is responsible for that address.

According to examples of the presently disclosed subject matter, the backend servers 320 serve requests from the frontend severs 310. The backend servers 320 are adapted to write the write data to the storage 340 (e.g., hard drive disks, flash drives and other solid state drives, etc.) and hold metadata which allows reads and writes, this metadata can also include metadata which is related to deduplication.

According to examples of the presently disclosed subject matter, the backend server 320 holds a map from logical addresses to a list of virtual addresses which are associated with the logical addresses with which each one of the backend servers is associated. According to examples of the presently disclosed subject matter, the mapping between virtual addresses and respective data location is stored in the virtual address database 40. Still further by way of example, the BE 320 can be configured to maintain additional metadata in respect of various virtual addresses. As will be described in further detail below, according to examples of the presently disclosed subject matter, each virtual address entry includes a pointer, which either points to a storage location or to another virtual address entry. The storage locations which are pointed to can be local, which means that the pointer is to an actual (including virtual) storage location rather than pointer to another virtual address (which either include a pointer to the actual storage location or which itself points to another virtual address). When the virtual address entry includes a pointer to a storage location of the write data, the storage location can reside in a storage device on the same node as the BE server where the virtual address entry is stored, or it can be external to the BE server, e.g. it can be on some other backend server or it can even be separate from any of the backend servers. According to examples of the presently disclosed subject matter, some or all virtual address entries can include additional metadata related to the deduplication process, as will be described below.

The deduplication database stored on the deduplication database servers 30 holds mappings from each one of a plurality of hash values of write data segments to virtual addresses which hold a pointer to the storage location of the respective write data. By way of example, each virtual address is represented by a respective virtual address reference key. Virtual address reference key according to examples of the presently disclosed subject matter are described below. According to examples of the presently disclosed subject matter, the deduplication database is configured to store at most one virtual address reference key per each distinct hash value. According to examples of the presently disclosed subject matter, if two different write data segments share the same hash value a hash collision exists. This is not to be confused with the case where the same write data is associated with two (or more) logical addresses. The latter case is not a hash collision. According to examples of the presently disclosed subject matter, in the case of a hash collision among two or more write data segments only one of the write data segments can be deduplicated. Examples of the presently disclosed subject matter which include handling of two different write data segments that share the same hash value, and examples of the presently disclosed subject matter which include handling of hash collision shall be described below.

In further examples of the presently disclosed subject matter, two or more virtual address entries can be associated with a certain hash value in the deduplication database such that the write data associated with each one of the two or more virtual address entries that are associated with the same hash value is different from the write data that is associated with the other virtual address entry,, even though they share the same hash value.. Further by way of example, if the hash value that is computed for an incoming data write segment is found in the deduplication database (and it is thus associated with an existing virtual address), then the virtual address reference key that is associated with the existing virtual address entry can be obtained from the deduplication database, and can be used to obtain the write data that is associated with the existing virtual address entry, and the write data that is associated with the existing virtual address entry can be compared with the incoming write data. This process can be repeated for each virtual address reference key that is listed in the deduplication database in associated with the hash value which is equal to the hash value of the incoming write data to either find a matching write data or to determine that there isn't an existing virtual address entry that is associated with the same write data as the incoming write data. If no matching data is found after comparing the incoming write data with all of the write data of these virtual address entries which share the same hash value, then it is possible to either add to the deduplication database in associated with the hash value a new virtual address reference key which is associated with the new virtual address entry, or to avoid doing so, such that the incoming write will not be deduplicated (its virtual address entry will not include a invalid deduplication indicator). The format a metadata which is included in a non-deduplicated virtual address entry is described below.

According to examples of the presently disclosed subject matter, the deduplication database servers 330 can support various actions including:
lookup_and_store(hash_value, new_virtual_address) and
remove_mapping(hash_value).

The lookup_and_store(hash_value, new_virtual_address) operation involves checking if the input hash values (hash_value) is already mapped to a virtual address reference key. By way of example, if it is determined that the input hash values is already mapped to a virtual address reference key, the existing virtual address reference key to which the input hash values is mapped is returned. Further by way of example, the existing virtual address reference key to which the input hash values is already mapped can be returned to the backend server 320 which sent the query to the deduplication database, for further processing, as will be described below. Otherwise, if the deduplication database 330 does not return a virtual address reference key which is already associated with the input hash value, the deduplication database 330 can be configured to add an entry to the database 330 mapping the input virtual address reference key (new_dedup_virtual_address) to the input hash value (hash_value), and return an acknowledge notification to the backend server 320 that issued the query.

The remove_mapping(hash_value) operation involves removing a mapping for the input hash_value. By way of example the remove mapping operation can be called (e.g., by an 10 handler 20) when a backend server 320 has a virtual address entry whose reference count reaches zero and is removed. The metadata included in a virtual address entry, and the counter increment operation shall be described below. A backend server 320 which removed a virtual address entry whose reference count reached zero, can be configured to implement a delay, e.g., by a predefined period of time, before invoking the remove mapping function. Still by way of example, in such a case, some other BE server 320 can attempt to compare write data (e.g., new write data) to a write data pointed by a virtual address entry referenced by a virtual address reference key found in the deduplication DB, and may fail.

According to examples of the presently disclosed subject matter, the front ends servers (collectively abbreviated herein "FE") 310 can be configured to receive IO requests (e.g., read and write requests) from external hosts 90. Upon receiving an IO request, the respective FE 310 can be configured to determine with which LBA the IO request is associated. The FE 310 can use address mapping tables (or mapping functions) to determine, based on the logical address referenced in the IO request, to which backend server from the plurality of backend servers 320 to address the IO request.

According to examples of the presently disclosed subject matter, the back-end servers (collectively abbreviated herein "BE") 320 can each be associated with a set of logical addresses. According to examples of the presently disclosed subject matter, the IO handler 20 can be implemented as part of the BE 320. In this regard, it would be appreciated that the IO handler 20 can be a distributed component. The BE 320 can also be configured to hold the virtual address database 40, which can also be implemented as a distributed component which is distributed over a plurality of back- end servers 320.

Having provided a high level description of the various components of the storage system, more details are now provided with respect to the operation of the storage system. The following description is made with reference to a method according to examples of the presently disclosed subject matter. It should be appreciated, that the examples of the method, although described with reference to the various components of the system presented above, are not limited to being implemented on such components and can be implemented on any suitable computer hardware or hardware/software combination.

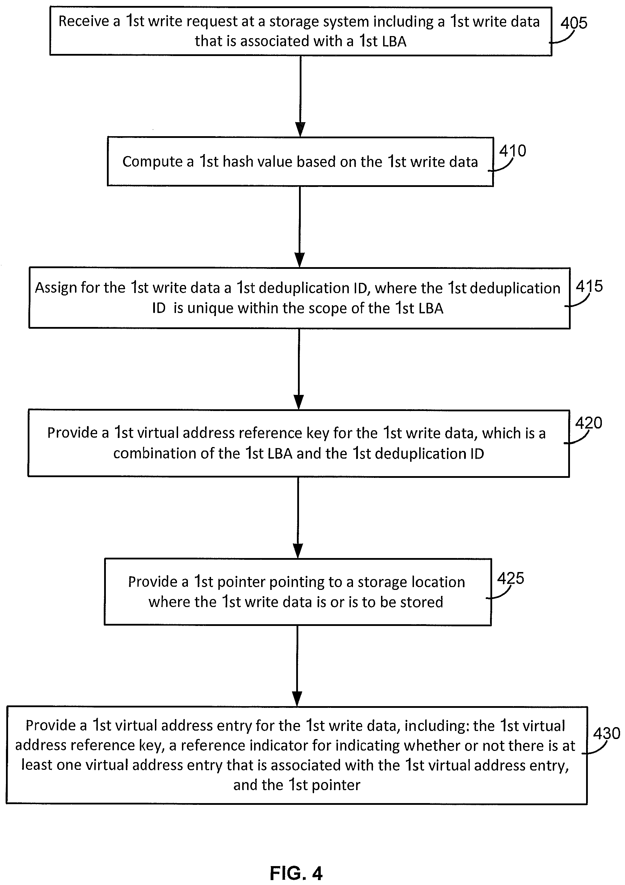

Referring now to FIG. 4, there is shown a flow chart illustration of a method according to examples of the presently disclosed subject matter. The flow starts with the receipt of a first write request at the storage system 100 including a first write data that is associated with a first LBA (block 405). Note that the term "first" as used herein does not mean the very first write request, write data, LBA, hash value, deduplication ID, virtual address entry, virtual address reference key or pointer; rather it is used to distinguish from a "second" write request, write data or LBA. Likewise, "second", "third", "fourth", etc. are also meant to distinguish among different write requests, write data, LBAs, hash values, deduplication IDs, virtual address entries, virtual address reference keys or pointers..

By way of example, the write request is received by one of the FE servers 310, which determines to which BE server 320 the write request should be directed, for example, according to the LBA which is referenced in the request.

It would be appreciated that a write request from a host 90 can reference a plurality of LBAs and is not necessarily addressed to just one LBA. The FE server which receives the write request determines in the domain of which BE server(s) the LBA(s) referenced in the request fall, and distributes the write data to the appropriate BE servers. It would be appreciated that FE servers can also distribute incoming write requests or parts of incoming write requests among themselves.

According to examples of the presently disclosed subject matter, metadata is generated, maintained and used at the virtual address level, which is a superset of the LBAs in the system. Thus, according to examples of the presently disclosed subject matter, the write data which is associated with each single LBA is handled independently of the write data that is associated with other LBAs. For convenience, the following description refers to the handling a write data which is associated with a single LBA, but it would be appreciated that in case a IO request is associated with two or more (e.g., three, four, ..., n) LBAs, the process described herein can be carried out in a similar manner in respect of each one of the LBAs with which the IO request is associated.

Next, a first hash value is computed based on the first write data (block 410). According to examples of the presently disclosed subject matter, the BE server 320 which is associated with the first LBA with which the first write data is associated receives the first write data from the FE server 310, and the IO handler 20 computes the first hash value based on the first write data. Different hash functions and computations can be used for computing the hash value based on the write data.

The IO handler 20 can be further adapted to assign to the first write data a first deduplication ID (block 415). According to examples of the presently disclosed subject matter, the IO handler 20 is configured such that deduplication IDs are assigned such that within the scope of each logical block address each deduplication ID is unique.

At block 420, a first virtual address reference key can be provided for the first write data, where the first virtual address reference key is a combination of the first LBA with which the first write data is associated and the first deduplication ID which was assigned to the first write data. As mentioned above, either as part of the LBA or as a separate indicator, the volume ID to which a given LBA belongs can also be used as part of the virtual address reference key. Thus for example, in a storage system that has multiple volumes (each volume is associated with a unique volume ID), where in different volumes there is at least some overlap with other volume(s) LBAs, the virtual address reference can should also include an identifier of the volume to which the LBA belongs. In such cases, the deduplication IDs are assigned such that within the scope of any <volume ID, LBA> each deduplication ID is unique. For example, the first virtual address reference key can be provided by the IO handler 20. The utility of the virtual address, and of the metadata which is used with the virtual address entry, shall become apparent from the following description.

At block 425 a first pointer is provided in association with the first write data, where the first pointer points to a storage location where the first write data is or is to be stored. For example, the first pointer can be provided by the IO handler 20. Further by way of example, the BE 320 can be associated with one or more storage devices 340 and can hold a mapping from virtual addresses which the BE 320 manages to storage locations in the storage device(s) which are associated with the BE 320. In case there are several BE servers, each BE can be associated with a different set of storage devices (physical or virtual) and can hold a mapping from virtual addresses which the BE 320 manages to storage locations in the storage device(s) which are associated with the BE 320. In a further example, some or all of the storage devices can be shared amongst some or all of the BE servers 320.

At block 430, a first virtual address entry is provided for the first write data. The first virtual address entry can include: the first virtual address reference key, a reference indicator for indicating whether or not there is at least one virtual address entry that is associated with the first virtual address entry, and the first pointer.

According to further examples of the presently disclosed subject matter, the IO handler 20 can be further configured to include in the first virtual address entry a validity indicator. According to examples of the presently disclosed subject matter, the validity indicator can indicate whether the first write data with which the first virtual address entry is associated is the latest data that is written to the first logical block address, or not. In still further examples of the presently disclosed subject matter, the validity indicator can be a counter which can be used, e.g., by the IO handler 20, to count the number of virtual addresses that are associated with the first virtual address entry. Further by way of example, the number of virtual addresses which are associated with the first virtual address entry can include the first virtual address entry itself and any virtual address entries which reference the first virtual address entry.

According to examples of the presently disclosed subject matter, the sequence of operations shown in FIG. 4 is implemented when it is determined that the first hash value is not already associated with an existing virtual address entry or when due to other considerations the system decides to avoid checking whether or not the first hash value is already associated with an existing virtual address entry. Such other consideration can include for example performance considerations. Examples of performance consideration can include the following (a) during high IO stress, the system may avoid deduplication. (b) The user may wish to disable deduplication for certain data addresses/volumes for which they believe the benefit will not be worth the performance penalty.

A description of a scenario in accordance with examples of the presently disclosed subject matter, where the first hash value is associated with an existing virtual address entry shall be described below.

It would be appreciated that hosts 90 use logical addresses (LBAs) to address IOs to the storage system 100, e.g., in order to read/write data from/to the system. Thus, any logical block address can only point to a single data segment in the storage device (physical or virtual). When certain write data is first stored in the storage system, the metadata for that write data can point to the actual storage location (physical or virtual) of the write data. The metadata of subsequent yet identical write data can point to the address in which the data was previously written. If this is the case, then it implies that a single LBA may point to more than one data item, since the logical address must continue pointing to the data item as long as other addresses point to it, even if the logical address is rewritten and its pointer needs to point to another location where the logical addresses updated write data is stored. Examples of the presently disclosed subject matter implement virtual addresses and store certain metadata in databases in order to address this issue, as will be apparent for the present disclosure.

It should be noted, that according to examples of the presently disclosed subject matter, a virtual address (or a virtual address entry, which is the system data which represent a virtual address) exists in the system so long as at least one virtual address points to it, including the virtual address itself. This means that a virtual address, say a first virtual address is maintained as long as it is holds the latest data of a certain LBA, say a first LBA, or when there is at least one other virtual address, say a second virtual address, which is associated with another LBA, say a second LBA, where it is the latest data (of the second LBA) and which references the first virtual address in its pointer. This means that the second virtual address entry is associated with the same write data as the first virtual address entry, and although the first virtual address entry is no longer associated with the latest write data within the scope of the first LBA, the second virtual address entry which points to the first virtual address entry is still the latest version of the second LBA, and thus the metadata which is included in the first virtual address entry needs to be maintained.

Virtual Addresses which are not deduplicated, for example, due to hash collision, can be marked, for example, with invalid deduplication indication, to indicate that the respective write data is stored locally and is not referenced by the deduplication DB.

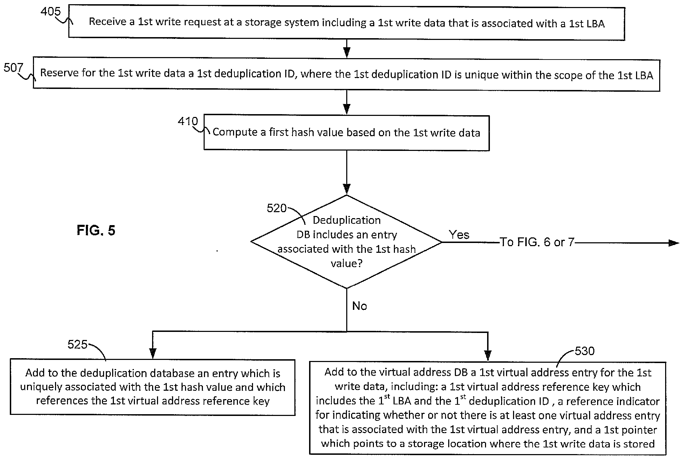

Reference is now made to FIG. 5, which is a flow chart illustration of an implementation of a method under certain circumstances, according to examples of the presently disclosed subject matter. According to examples of the presently disclosed subject matter, at block 405, a first write request is received at the storage system 100 including a first write data that is associated with a first LBA. As mentioned above, by way of example, the write request can be received by one of the FE servers and can be forwarded to the appropriate BE server.

According to examples of the presently disclosed subject matter, a first deduplication ID can be reserved for the first write data, and as mentioned above, the deduplication ID which is allocated for the write data is unique within the scope of the respective LBA (in this case the first LBA) (block 507). The need to reserve the deduplication ID at this stage will become apparent from the description below.

Block 410 in which a first hash value is computed based on the first write data, was already referred to above.

At block 520, it is determined whether the deduplication database 30 already includes an entry which is associated with the first hash value. By way of example, the IO handler 20 can use the first hash value which it computed for the first write data to query the deduplication database server(s) 30. If there is already an entry for a hash value that is equal to the first hash value, the query will return the virtual address reference key of the virtual address entry that is already associated with a hash value that is equal to the first hash value. Still further by way of example, if there is no such entry, the deduplication database 30 can return a response with a null value or some other error response, or the deduplication database 30 response which includes the first virtual address reference key. Yet further by way of example, in whichever format the response from the deduplication database 30 is provided, the IO handler 20 can be configured to conclude that the first virtual address entry is the first entry in the storage system which is associated with the first hash value.

In case it is determined that there is no existing entry in the deduplication database 30 for the first hash value, an entry for the first hash value, which references the first virtual address reference key can be added to the deduplication database (block 525), and further in response to determining that there is no existing entry in the deduplication database 30 for the first hash value, a first virtual address entry for the first write data can be added to the virtual address database 40, where under the circumstances leading to block 530 (namely, there is no existing entry in the deduplication database 30 for the first hash value) the first virtual address entry can include the first virtual address reference key, a reference indicator for indicating whether or not there is at least one virtual address entry that is associated with the first virtual address entry, and a first pointer which points to a storage location where the first write data is stored. It would be appreciated that blocks 525 and 530 can be implemented in parallel or in series (one after the other).

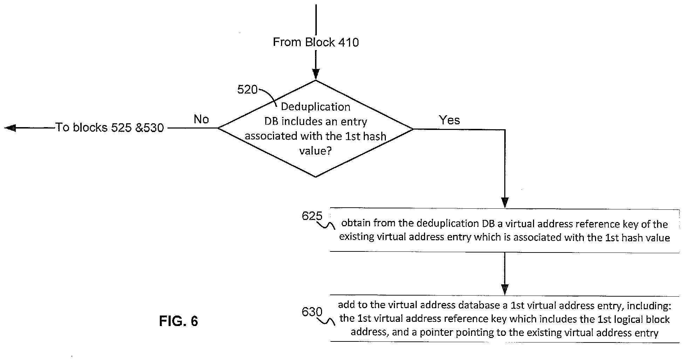

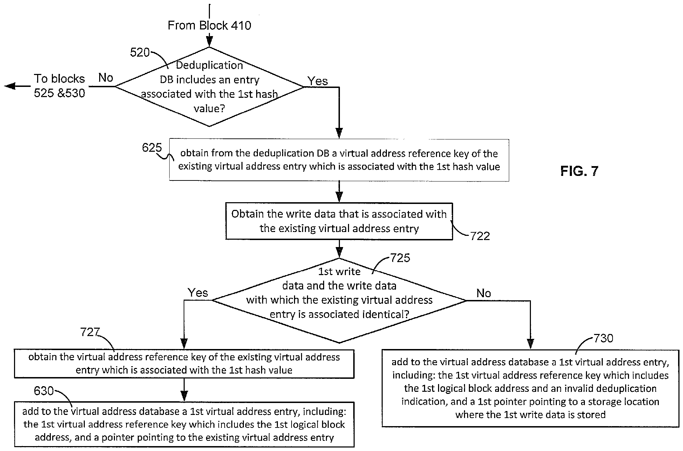

Examples of the handling of the case where it is determine at block 520 that there is an existing entry in the deduplication database 30 for the first hash value are illustrated in FIGs. 6 and 7 which will now be described.

Referring now to FIG. 6, there is shown a flow chart illustration of an implementation of a method under certain circumstances, according to examples of the presently disclosed subject matter. FIG. 6 illustrates a possible implementation of a method according to examples of the presently disclosed subject matter, when it is determined at block 520 that there is an existing entry in the deduplication database 30 for the first hash value. Block 520, and preceding blocks which can be implemented in a method according to examples of the presently disclosed subject matter were described above in FIGs. 4 and 5, and should be considered to be part of the description of FIG. 6.

According to examples of the presently disclosed subject matter, following the determination at block 520 that there is an existing entry in the deduplication database 30 for the first hash value, a virtual address reference key of the existing virtual address entry which is associated with the first hash value can be obtained from the deduplication database 30 (block 625). As mentioned above, in some examples, the response from the deduplication database 30, which indicates that there is an existing entry in the deduplication database 30 for the first hash value, can also include the virtual address reference key of the virtual address entry that is already associated with a hash value that is equal to the first hash value.

According to examples of the presently disclosed subject matter, further in response to determining that there is an existing entry in the deduplication database 30 for the first hash value, a first virtual address entry can be added to the virtual address database 40, where under these circumstances leading to block 630 (namely, there is an existing entry in the deduplication database 30 for the first hash value), the first virtual address entry includes the first virtual address reference key which includes the first logical block address, and a pointer pointing to the existing virtual address entry, for example, the virtual address reference key which was returned from the deduplication database 40. According to examples of the presently disclosed subject matter, the virtual address entry of block 630 does not include a deduplication ID. Further by way of example the virtual address reference key to which the pointer in the first virtual address entry point is a combination of another LBA and a deduplication ID that was allocated for that virtual address entry.

It would be appreciated that the use of the deduplication ID enables association of several (e.g., two, three,..., n) data write segments with a single logical address by creating a virtual addressing layer over the logical addressing layer. This in turn allows maintaining the metadata (including pointers to storage locations) to a certain write data segment when there are other virtual addresses (one or more) which are associated with the same write data, and using the same storage location for all virtual addresses sharing the same write data instead of duplicating the data, and at the same time the virtual address layer can be used to keep the metadata (including pointers to storage locations) to a certain write data segment (e.g., to be used by other virtual addresses which point to the metadata) when the logical address with which the metadata is associated was overwritten and updated write data was stored in the storage system for that logical address. Thus, according to examples of the presently disclosed subject matter, a deduplication ID (or a valid deduplication ID) can be included in the metadata of a certain virtual address entry (e.g., as part of the virtual address reference key) when the virtual address entry includes a pointer to an actual storage location (or to a virtual storage location) where write data is stored in the storage system, and according to examples of the presently disclosed subject matter, virtual address entries which point to another virtual address (and not to an actual/virtual storage location) do not include a valid deduplication ID, for example, such virtual address entries can include an empty deduplication ID.

In the implementation of the method according to an example of the presently disclosed subject matter which is illustrated in FIG. 6 and which was described above with reference to FIG. 6, there is an assumption that identical hash values mean that the write data is identical. This assumption is based on the hashing algorithm, which can be configured such that, with high enough and acceptable probability, identical hash values are associated with identical write data. For example, the probability is higher than some predefined probability. In another example, the probability is higher than the probability that reading data from the storage returns the same data that was stored. However, in some examples of the presently disclosed subject matter, when it is determined that the deduplication database already includes an entry which has a hash value that is equal to the hash value that was computed for the write data of an incoming write request, the write data segments are compared and the operation of the system depends on the result of the comparison, as will be further discussed now with reference to FIG. 7. FIG. 7 to which reference is now made is a flow chart illustration of an implementation of a method under certain circumstances, according to examples of the presently disclosed subject matter. FIG. 7 illustrates a possible implementation of a method according to examples of the presently disclosed subject matter, when it is determined at block 520 that there is an existing entry in the deduplication database 30 for the first hash value. Block 520, and preceding blocks which can be implemented in a method according to examples of the presently disclosed subject matter were described above in FIGs. 4 and 5, and should be considered to be part of the description of FIG. 7. It would be appreciated that the implementations according to examples of the presently disclosed subject matter, shown in FIG. 6 and in FIG. 7, and the description provided herein with respect to each of FIG. 6 and FIG. 7, are mutually exclusive, and if an algorithm uses one of them, the other one is not used.

According to examples of the presently disclosed subject matter, following the determination at block 520 that there is an existing entry in the deduplication database 30 for the first hash value, a virtual address reference key of the existing virtual address entry which is associated with the first hash value can be obtained from the deduplication database 30. This operation was described above with reference to block 625, and the above description is applicable here. As mentioned above, in some examples, the response from the deduplication database 30, which indicates that there is an existing entry in the deduplication database 30 for the first hash value, can also include the virtual address reference key of the virtual address entry that is already associated with a hash value that is equal to the first hash value.

Using the virtual address reference key of the existing virtual address entry which is associated with the first hash value that was obtained from the deduplication database 30, the write data that is associated with the existing virtual address entry can be obtained (read from a storage location that is pointed to by the metadata in the existing virtual address entry) (block 722).

According to examples of the presently disclosed subject matter, the obtained write data that is associated with the existing virtual address entry can be compared with the first write data which is associated with the first write command to determine if the two write data segments are identical or not (block 725).

According to examples of the presently disclosed subject matter, if it is determined at block 725 that the write data that is associated with the existing virtual address entry and the first write data which is associated with the first write request are identical, than the virtual address reference key of the existing virtual address entry which is associated with the first hash value is obtained (block 727) and 630 which were described above as part of the description of FIG. 6 is implemented. By way of example, the virtual address reference key of the existing virtual address entry which was obtained from the deduplication database at block 625 could be stored in a memory unit and can be pulled from the memory unit when block 727 is implemented. Further by way of example, if it is determined at block 725 that the write data that is associated with the existing virtual address entry and the first write data which is associated with the first write request are not identical, it is determined that a hash collision occurred, and a first virtual address entry is created for the first write data, where the first virtual address entry includes: the first virtual address reference key which includes the first logical block address and an invalid deduplication indication, and a first pointer pointing to a storage location where the first write data is stored (block 730). The format of the virtual address entry in case of a hash collision indicates that the first virtual address entry cannot be deduplicated, and the first write data which is associated with the first virtual entry has to be stored in the physical (or virtual) storage device.

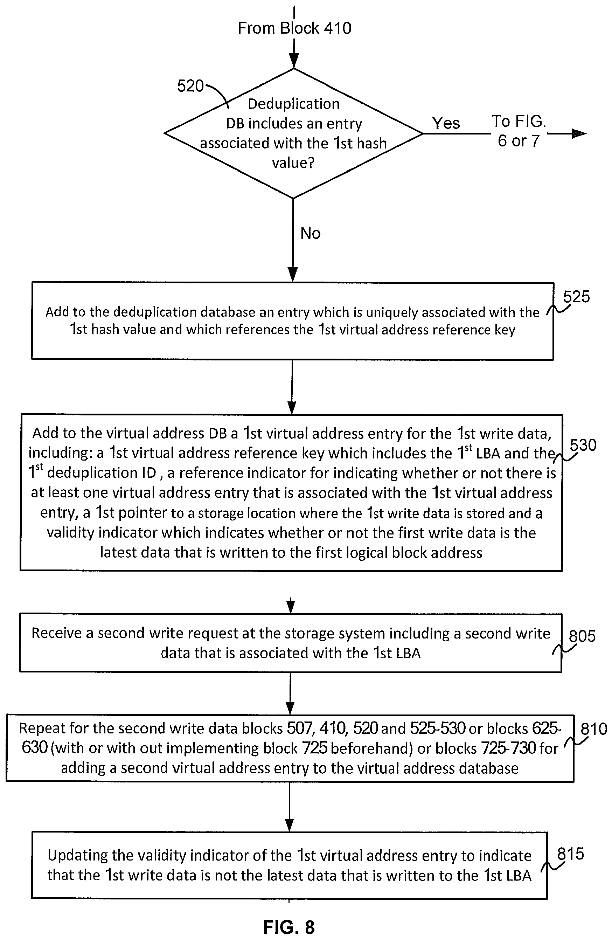

Reference is now made to FIG. 8 which is a flow chart illustration of an implementation of a method under certain circumstances, according to examples of the presently disclosed subject matter. In FIG. 8 blocks 520, 525 and 530 describe the inclusion in the virtual address database 40 of a first virtual address entry for a first write data which is associated with a first LBA. Blocks 520, 525 and 530 and preceding blocks which can be implemented in a method according to examples of the presently disclosed subject matter were described above in FIGs. 4 and 5, and should be considered to be part of the description of FIG. 8. It is noted that blocks 525 and 530 are illustrated in FIG. 5 parallel blocks and here in FIG. 8 blocks 525 and 530 are shown to be serial. Both implementations are within the scope of the present disclosure.

As mentioned above, the first virtual address entry includes: a first virtual address reference key which includes the first LBA and the first deduplication ID, a reference indicator for indicating whether or not there is at least one virtual address entry that is associated with the first virtual address entry, a first pointer to a storage location where the first write data is stored, and a validity indicator which indicates whether or not the first write data is the latest data that is written to the first logical block address.

At block 805 a second write request is received at the storage system, where the second write request includes a second write data that is associated with the first LBA. For the sake of illustration, in the scenario illustrated in FIG. 8 and described herein, it is assumed that at the time the second write request is received and processed, the first write data is the latest write data for the first LBA, and the validity indicator in the first virtual address entry indicates that the first write data is the latest data that is written to the first logical block address.

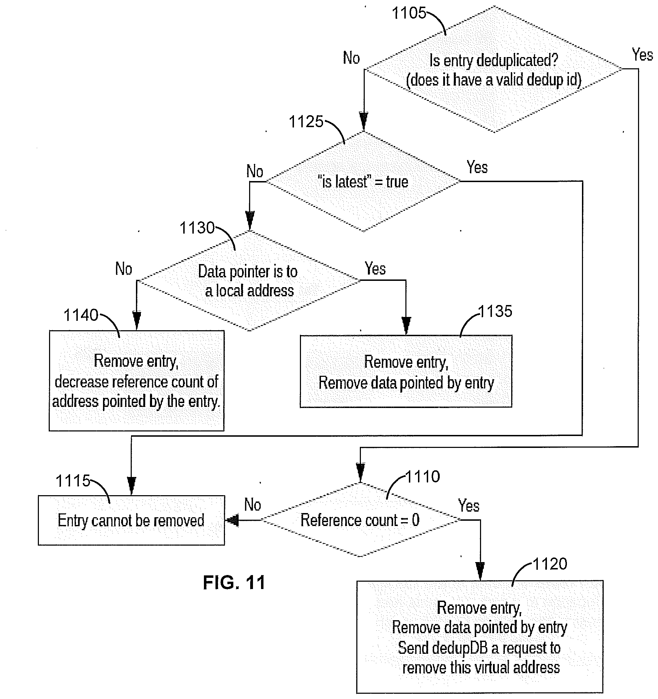

Accordingly, in some examples of the presently disclosed subject matter, the IO handler is responsive to receiving the second write request which includes the second write data that is associated with the first LBA for repeating, for example, blocks 507, 410, 520 and blocks 525-530 or blocks 625-630 (with or with out implementing blocks 722, 725 and 727 beforehand) or block 730 (with or with out implementing blocks 722 and 725 beforehand) for adding a second virtual address entry to the virtual address database 40, depending on the state of the deduplication database and depending on the implementation of the method. Adding a virtual reference entry can involve or trigger updates to other virtual address entries, for example, when due to the addition of the virtual address entry a reference counter of another virtual address entry is decremented, and thus, further updates of the virtual address database and/or of the deduplication database may be take place, as will be apparent from the description of certain examples of the presently disclosed subject matter, including but not limited to the process illustrated in FIG. 11 and described hereinbelow with reference to FIG. 11.

Thus for example, in case it is determined that the second write request includes write data that is identical to the write data with which the first virtual address entry is associated, blocks 625 and 630 can be implemented. Further by way of example, in case it is determined that the hash value for the second write data is equal to the hash value that was computed based on the first write data, blocks 722, 725 and 727 can be implemented, and in case it is determined that the first write data and the second write data are identical block 625 and 630 can be implemented, and if it is determined that the first write data and the second write data are not identical, block 730 can be implemented.

According to examples of the presently disclosed subject matter, in parallel or in series with the recordation of the second virtual address entry (in block 810), the validity indication of the first virtual address entry can be updated to indicate that the first write data is no longer the latest data that is written to the first LBA (block 815). In further examples of the presently disclosed subject matter, when a new virtual address entry that is associated with a certain LBA is added to the storage system, and it replaces a previous virtual address entry as the latest data that was written to that LBA, if the previous virtual address entry included a reference counter, the reference counter is decremented. In the scenario illustrated in FIG. 8, the reference counter in the first virtual address entry is decremented. It would be appreciated that it may still be necessary to maintain the first virtual address entry, for example, in case some other virtual address entry (e.g., one that is associated with a different LBA) is associated with the same write data as was the first virtual address entry, and that other virtual address entry points to the first virtual address entry which includes a pointer to the storage location of the first write data.

It would be appreciated that according to examples of the presently disclosed subject matter, it may still be necessary to maintain the first virtual address entry in the virtual address database, even after it no longer holds the latest data for the first LBA, because some other virtual address(es) which is associated with another LBA can still need the metadata (e.g. the pointer to the storage location of the write data) in the first virtual address entry. However, when the reference counter of a virtual address entry reaches 'o' (or any other reference indicator indicates no current references), the virtual address database can be updated, and possibly the virtual address entry can be removed. Further by way of example, when the reference counter of the virtual address entry reaches 'o' a request can be issued for the deduplication database to remove the entry which references the virtual address entry whose counter reached 'o'. These operations are further illustrated in FIG. 11 and are described below with reference to FIG. 11.

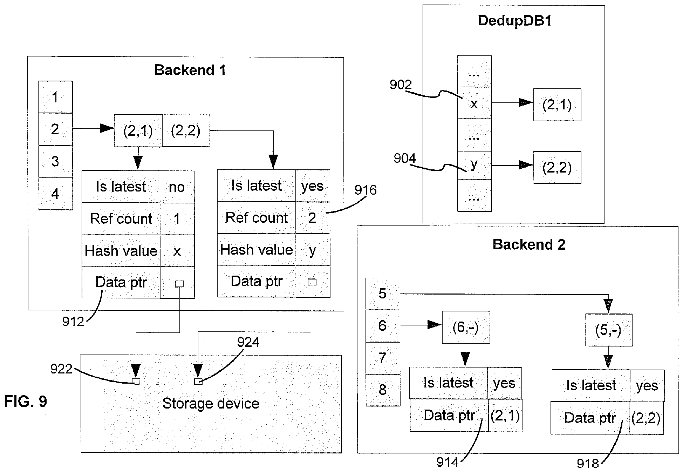

Reference is now made to FIG. 9, which is a graphical chart diagram illustration of the state of a virtual address database and the state of the deduplication database following the processing of four different write requests according to examples of the presently disclosed subject matter. For purposes of illustration assume that the storage system to which the example shown in FIG. 9 is referring has eight logical block addresses and two backend servers, BE1 is responsible for logical block addresses 1-4 and BE2 is responsible for logical block addresses 5-8.

The scenario which is illustrated by way of example in FIG. 9 starts with the receipt of a first write request which references LBA 2 at BE1. BE1 reserves deduplication ID1. BE1 computes a hash value based on the write data in the first write request, say that the result is X. BE1 then sends a request to the deduplication database (dedeupDBi) to determine whether there is an existing virtual address entry that is associated with the hash value X. The response from the deduplication database indicates that there is not such virtual address entry. Accordingly, an entry 902 is added to the deduplication database which includes the hash values X and maps this hash value to the virtual address reference key (2, 1). The deduplication database then notifies BE1 about the creation of the entry, and in response, BE1 adds an entry 912 to the virtual address database for the first write data. The entry 912 for the first write data includes the virtual address reference key (2, 1) with a reference count that is initialized to 1, a validity indicator which indicates that this is the latest write data for LBA 2, and a pointer to a storage location 922 that is allocated for the first write data.

As is further shown in FIG. 9, sometime after the first write request is received and processed, a second write request is received at the storage system. The second write request references LBA 6 and is received at BE2. The second write request includes a second write data, which is identical to the first write data that was included in the first write request. Accordingly, the hash value that is computed by BE2 for the second write data is equal to the hash value that was computed for the first write data, namely it equals X. BE2 sends a request to the deduplication database (dedeupDBi) to determine whether there is an existing virtual address entry that is associated with the has value X. The response from the deduplication database indicates that virtual address entry 912 is already registered in the deduplication database in association with the hash value X. Accordingly, there is no need to add a further entry to the deduplication database in response to the second write request. The deduplication database then notifies BE2 that there is an existing virtual address entry (marked with the numeral 912 in FIG. 9) which is already associated with the hash value (X) that was included in the query from BE2. The deduplication database can include in the notification the virtual address reference key of the virtual address entry 912 which is already associated with the hash value (X) that was included in the query from BE2, which is in this case (2,1). In response to the notification from the deduplication database, BE2 adds an entry 914 to the virtual address database for the second write data. The entry 914 for the second write data includes the virtual address reference key (6, -), a validity indicator which indicates that this is the latest write data for LBA 6, and a pointer to the existing virtual address entry which is associated with the hash value that was computed for the second write data, which is in this case (2,1). In response to the creation of the virtual address entry 914 for the second write data, and since this virtual address entry 914 references the virtual address entry (2,1) (marked 912 in FIG. 9), the reference counter in the virtual address entry (2,1) is incremented to indicate that there is an additional virtual address entry (namely virtual address entry (6,-) (marked 914 in FIG. 9) which references the virtual address entry (2,1).

Continuing with the description of the sample scenario shown in FIG. 9, at some point after the second write request is received and processed, a third write request is received at the storage system. The third write request references LBA 2 and is received at BE1. BE1 reserves deduplication ID 2 (deduplication ID 1 is already taken). The third write request includes a third write data, which is different from the write data that was included in the first and second write requests. Accordingly, the hash value that is computed by BE1 for the third write data is different from to the hash value that was computed for the first and second write data, say it equals Y. BE1 then sends a request to the deduplication database (dedeupDBi) to determine whether there is an existing virtual address entry that is associated with the hash value Y. The response from the deduplication database indicates that there is not such virtual address entry. Accordingly, an entry 904 is added to the deduplication database which includes the hash values Y and maps this hash value to the virtual address reference key (2, 2). The deduplication database then notifies BE1 about the creation of the entry, and in response, BE1 adds an entry 916 to the virtual address database for the third write data. The entry 916 for the third write data includes the virtual address reference key (2, 2) with a reference count that is initialized to 1, a validity indicator which indicates that this is the latest write data for LBA 2, and a pointer to a storage location 924 that is allocated for the third write data. In addition, BE1 modifies the metadata stored in the virtual address entry (2,1) (marked 912 in FIG. 9) to indicate that it no longer points (directly or by pointing to another virtual address entry) to the latest version of the data for the respective LBA, namely LBA 2, and the reference counter is decremented. The decrement of the reference counter is preformed since the reference to the storage location of the write data is no longer needed for virtual address entry (2,1) (marked 912 in FIG. 9), and is now only needed for the virtual address entry (6,-). This state of virtual address entry (2,1) (marked 912 in FIG. 9)is the one that is illustrated in FIG. 9.

The fourth write request, for which there is reference in the sample scenario in FIG. 9, is received after the third write request is received and processed. The fourth write request references LBA 5 and is received at BE2. The fourth write request includes a fourth write data, which is identical to the third write data that was included in the third write request. Accordingly, the hash value that is computed by BE2 for the fourth write data is equal to the hash value that was computed for the third write data, namely it equals Y. BE2 sends a request to the deduplication database (dedeupDBi) to determine whether there is an existing virtual address entry that is associated with the has value Y. The response from the deduplication database indicates that virtual address entry 916 is already registered in the deduplication database in association with the hash value Y. Accordingly, there is no need to add a further entry to the deduplication database in response to the fourth write request. The deduplication database then notifies BE2 that there is an existing virtual address entry (marked with the numeral 916 in FIG. 9) which is already associated with the hash value (Y) that was included in the query from BE2. The deduplication database can include in the notification the virtual address reference key of the virtual address entry 916 which is already associated with the hash value (Y) that was included in the query from BE2, which is in this case (2,2). In response to the notification from the deduplication database, BE2 adds an entry 918 to the virtual address database for the fourth write data. The entry 918 for the fourth write data includes the virtual address reference key (5, -), a validity indicator which indicates that this is the latest write data for LBA 5, and a pointer to the existing virtual address entry which is associated with the hash value that was computed for the fourth write data, which is in this case (2,2). In response to the creation of the virtual address entry 918 for the fourth write data, and since this virtual address entry 918 references the virtual address entry (2,2) (marked 916 in FIG. 9), the reference counter in the virtual address entry (2,2) is incremented to indicate that there is an additional virtual address entry (namely virtual address entry (5,-) (referenced 918 in FIG. 9) which references the virtual address entry (2,2).

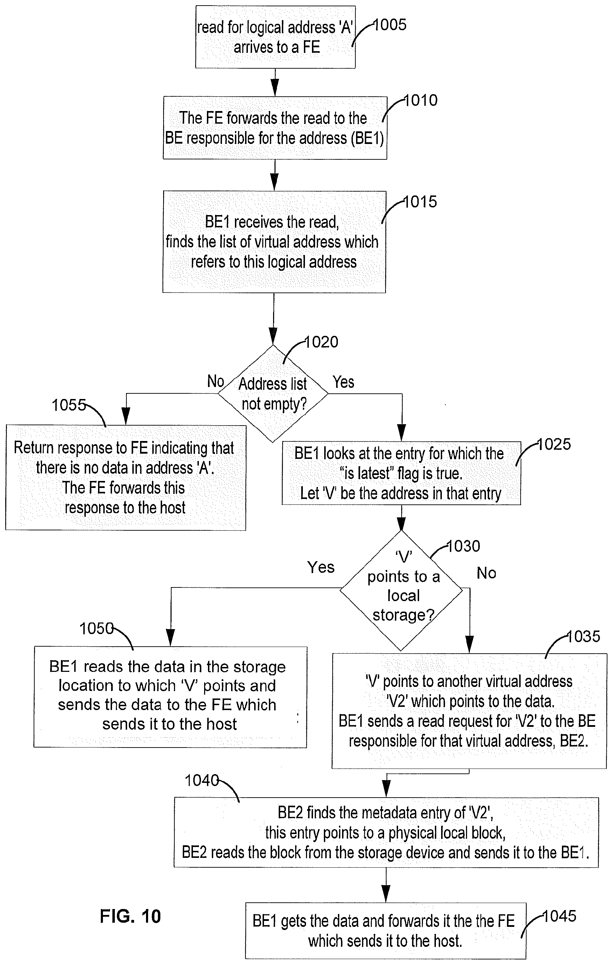

As mentioned above, according to examples of the presently disclosed subject matter, when a certain LBA is overwritten by new write data, a new virtual address entry is added and its validity indicator indicates that this is the latest version of the LBA with which the new virtual address entry is associated. In addition, in case the overwritten virtual address entry included a pointer which points to another virtual address entry, the addition of the new virtual address entry can trigger an update to the reference counter (as an example of a reference indicator) of the other virtual address entry. Referring to FIG. 9, assume that sometime after virtual address entry 918 is created, a new write request is received at the storage system which overwrites the data in LBA 5. The new virtual address entry is added to the virtual address database, and is marked as the latest data that is written to LBA 5. The validity indicator in the virtual address entry 918 is updated to indicate that, it is no longer associated with the latest data that is stored in the storage system for LBA 5. In addition, according to examples of the presently disclosed subject matter, the reference counter (as an example of a reference indicator) in the virtual address entry 916, which the virtual address entry 918 pointed to, is decremented. It would be appreciated that according to examples of the presently disclosed subject matter, the above updates to the virtual address database can, under certain circumstances, involve or trigger additional operations which include updating of the deduplication database and garbage collection, for example, as will be apparent from the description of certain examples of the presently disclosed subject matter, including but not limited to the process illustrated in FIGs. 10 and 11 and described hereinbelow with reference to FIGs. 10 and 11.

According to examples of the presently disclosed subject matter, the data that is stored in the storage system can be ready using the data that is stored in the virtual address database. FIG. 10 is a flow chart illustration of a read flow which can be implemented as part of some examples of the presently disclosed subject matter. The read flow that is illustrated in FIG. 10 begins with a receipt of a read request which references a LBA 'A' at a FE server of the storage system (block 1005).

The FE server forwards the write request to the backend server that is associated with the LBA 'A' that is referenced in the write request (block 1010). According to examples of the presently disclosed subject matter, the BE server receives the read request, and can be configured to find the list of virtual address which refer to LBA 'A' that is referenced in the read request (block 1015). For example, the BE server builds a virtual address entries list which includes all the virtual address entries in the virtual address database which are associated with the LBA 'A'.

Next, the BE server determines whether there are virtual address entries in the list (block 1020). If there is no virtual address entry which are associated with the LBA 'A' in the list, the BE server returns a message to the FE indicating that this address was no yet written, and the FE can forward this reply to the host (block 1055).

Otherwise, if there is at least one virtual address entry in the list, the BE server can be configured to find among the virtual address entries which are associated with the LBA 'A', the virtual address entry for which the validity indicator indicates that this is the latest data that is written to LBA 'A' (block 1025). In FIG. 10, by way of example, the virtual address entry which is associated with the latest data that is written to LBA 'A' is referenced virtual address V'. As illustrated in FIG. 10, the validity indicator can be a "is latest" flag, which can either be 'true' - in case this virtual address entry is associated with the latest write data that is associated with LBA 'A', or it can be 'false- in case this virtual address entry is not associated with the latest write data that is associated with LBA'A'.

At block 1030 it is determined whether the entity 'V' that is associated with the latest data that is written to LBA 'A' includes a pointer to a local storage or not, or whether it includes a pointer to a storage location or to another virtual address entry.

Further by way of example, in case the virtual address entry 'V' points to a local storage, BE1 reads the data in the storage location to which 'V' points and sends the data to the FE which sends it to the host (block 1050).

Still further by way of example, in case the virtual address entry 'V' points to another virtual address entry 'V2" which points to a storage location of the data, BE1 can be configured to send a read request to BE 2 that is responsible for that virtual address entry to which there is a reference in 'V' (block 1035). It would be noted that the target BE may be the same BE as the one that got the read request.

Next, BE2 can be configured to find the in the virtual address entry 'V2" the pointer which points to the storage location of the requested data, read the data in the designated storage location, and send it to the BE 1 who initiated the request (block 1040).

BE 1 gets the data and can forward it to the FE which in turn can sends it to the host (block 1045). it would be appreciated that other operations and a different flow can be devised for reading the data from a storage system that is designed and constructed according to examples of the presently disclosed subject matter, and the process illustrated in FIG. 10, and described above with reference to FIG. 10, is an example of one possible implementation of a possible read flow.

As part of some examples of the presently disclosed subject matter, a garbage collection process can be implemented in combination with one or more implementations of the data write process which was described above, and possibly also in combination with the data read process that was described above. According to examples of the presently disclosed subject matter, garbage collection of old entries can be done online, or in further examples, garbage collection can be implemented offline.

By way of example, online garbage collection can be implemented when a new write renders an older write (i.e., an existing virtual address entry) unnecessary. Examples of virtual address entries that can be considered to be unnecessary are provided below. The online garbage collection can be invoked after the write process is complete.

Further by way of example, offline garbage collection is a process which is invoked manually or as part of a predefined routine (e.g., after a predetermined time, in response to a certain parameter meeting some criterion, etc.), and which iterates over virtual address entries which are stored in the virtual address database, and removes virtual address entries which are no longer needed.

In both the case of the online garbage collection and in the case of the offline garbage collection, a virtual address entry may be remove if it is in one of the following states:
If a reference indicator in the virtual address entry indicates that no virtual address entry references it. For example, in case a reference counter is used, when the reference counter equals 'o'. In such a case, the data at the storage location which is pointed by this entry is deleted from the local storage and the deduplication database is notified, so that it can remove the entry for the respective hash value.

The entry is not deduplicated (i.e. it does not have a deduplication id), and its validity indication indicates that it is not the valid data for the LBA with which the virtual address entry is associated (e.g., a "is latest" flag is false). In such a case, if that virtual address entry points to local storage, the data pointed by this virtual address entry can be deleted from the local storage. Else, if that virtual address entry points to another virtual address entry (and the other virtual address entry points to the storage location of the data), the reference counter of the other virtual address entry which points to the storage location of the data can be decremented.

Referring now to FIG. 11, there is shown a flow chart illustration of a garbage collection process which can be implemented as part of some examples of the presently disclosed subject matter. The garbage collection process shown in FIG. 11 and described herein with reference to FIG. 11 refers to a single virtual address entry, but it would be appreciated that this process can be implemented many times in respect of different virtual address entries.

According to examples of the presently disclosed subject matter, initially it can be determined whether the (current) virtual address entry is deduplicated (block 1105). By way of example, a deduplicated virtual address entry, is one which has a valid deduplication ID.

According to examples of the presently disclosed subject matter, in case it is determined at block 1105 that the virtual address entry is deduplicated, the process flows to block 1110, where it is determined if the reference counter (as an example of a reference indicator) equals 'o', or not. In other words, it is determined in block 1110 whether according to the metadata in the virtual address entry there is any virtual address entry in the storage system which includes a pointer to or requires the metadata in the present virtual address entry, including the virtual address entry itself (for example, if it holds the latest data of the respective LBA).

If at block 1110 it is determined that the reference counter is not equal to 'o' (e.g., it equals 1 and above), or that the reference indicator indicates that the virtual address entry is need by at least one virtual address entry in the storage system, it is determined that the virtual address entry cannot be removed (block 1115), and the process can end with respect to this virtual address entry.

If however at block 1110 it is determined that the reference counter is equal to 'o', the virtual address entry can be removed, and the data in the storage location that was pointed to by the pointer in the virtual address entry can be removed or can be marked as invalid, and further, a request can be communicated to the deduplication ID to update its data and remove the virtual address entry from the deduplication ID (block 1120).

Returning now to block 1105, if it is determined that the virtual address entry is not deduplicated, the validity indicator of the virtual address entry can be checked to determine whether the virtual address entry is associated with latest (or the valid) write data of the respective LBA (block 1125).

According to examples of the presently disclosed subject matter, if it is determined at block 1125, that the virtual address entry is associated with the latest write data of the respective LBA, the virtual address entry can not be removed (block 1115).

According to examples of the presently disclosed subject matter, if it is determined at block 1125, that the virtual address entry is not associated with the latest write data of the respective LBA, it is determined whether the pointer in the virtual address entry points to a local address (an actual storage location) or not (block 1130).

If at block 1130 it is determined that the pointer in the virtual address entry points to a local address, the virtual address entry can be removed and the data in the storage location to which the virtual address entry points can be deleted (block 1135).

If however at block 1130 it is determined that the pointer in the virtual address entry points to another virtual address entry, the pointed virtual address entry can be removed, and the reference indicator in the pointed virtual address entry is updated (e.g., a reference counter is decremented) (block 1140). In case a reference counter is used in the pointed virtual address entry, the reference counter is decremented.

## Claims

1. A method of managing deduplication, in a storage system (100) comprising at least a first server and a second server, each server being assigned with a different storage location, the method comprising:
at the first server:
receiving a first write command that includes a first write data that is associated with a first logical block address assigned to the first server;
in respect of the first write data:
computing a first hash value based on the first write data;
determining whether the first hash value is already associated with an existing virtual address entry in a deduplication database, wherein the deduplication database is configured to store a plurality of hash value entries, each one of the entries being uniquely associated with a certain hash value, the hash value being mapped to a specific virtual address reference key, and in case the deduplication database (30) does not include a virtual address entry which is associated with the first hash value:
adding to the deduplication database (30) an entry which is uniquely associated with the first hash value and which references a first
virtual address reference key; the first virtual reference key being a combination of the first logical block address and a first deduplication ID reserved by the first server, wherein deduplication IDs are assigned such that within the scope of each logical block address each deduplication ID is unique;
adding to a virtual address database (40) in the storage system (100) a first virtual address entry for the first write data, including:
the first virtual address reference key;
a reference counter indicating the number of virtual address entries which reference the first virtual address entry;
a first pointer pointing to a storage location on a storage device of the storage system where the first write data is stored;
a validity indicator indicating whether the first write data is the latest data that is written to the first logical block address;
at the second server
receiving a second write command including a second write data that is associated with a second logical block address assigned to the second server;
in respect of the second write data:
computing a second hash value based on the second write data;
determining whether the second hash value is already associated with an existing virtual address entry in the deduplication database (30), and if it is associated with the first virtual address entry,
adding to the virtual address database (40) a second virtual address entry for the second write data, including:
a second virtual address reference key which includes the second logical block address; and
a second pointer pointing to the first virtual address entry.

2. The method according to claim 1, wherein the number of virtual addresses which are associated with the first virtual address entry includes the first virtual address entry itself and any virtual address entry which references the first virtual address entry.

3. The method according to claim 1, further comprising determining whether the second write data and the first write data are identical, and only if they are, executing the adding of the second virtual address entry including the second virtual address reference key and the second pointer which points to the existing first virtual address entry.

4. The method according to claim 1, wherein determining whether the second hash value is already associated with an existing virtual
address entry, comprises, if it is determined that the second hash value is associated with an existing virtual address entry, assuming that the second write data is identical to the write data that is associated with the existing virtual address entry, and thereby implementing said providing a second virtual address entry.

5. The method according to claim 1, further comprising incrementing the reference counter of the first virtual address entry to indicate that the second virtual address entry is now associated with the first virtual address entry.

6. The method according to claim 5, wherein the second virtual address reference key does not include a deduplication ID or includes a null deduplication ID.

7. The method according to claim 1, further comprising:
prior to adding to the virtual address database (40) the second virtual address entry, determining whether the second write data and the first write data are identical and in case the second write data and the first write data are not identical, indicating that there is a deduplication collision involving the second write data.

8. The method according to claim 7 further comprising:
in response to detecting the deduplication collision providing a second virtual address entry for the second write data, including:
a second virtual address reference key which includes the second logical block address and an invalid-deduplication indication;
a second pointer pointing to a storage location where the second write data is stored.

9. The method according to any one of the preceding claims , further comprising:
at the first server:
receiving a third write command including a third write data that is associated with the first logical block address;
computing a third hash value based on the third write data;
determining whether the third hash value is already associated with an existing virtual address entry in the deduplication database, and if not: maintaining the first virtual address entry in the virtual address
database; adding to the deduplication database (30) an entry which is uniquely associated with the third hash value and which references a third virtual address
reference key; the third virtual reference key beings a combination of the first logical block address and a third deduplication ID reserved by the first server, wherein the third deduplication ID is different from the first deduplication ID;
adding to the virtual address database (40) in the storage system (100) a third virtual address entry for the third write data; and
updating the validity indicator of the first virtual address entry to indicate that the first write data is not the latest data that is written to the first logical block address.

10. The method according to claim 9, wherein said third virtual
address entry includes : the third virtual address reference key, a reference counter indicating the number of virtual address entries which reference the third virtual address entry; a third pointer pointing to a storage location on a storage device of the storage system where the third write data is stored; and a validity indicator indicating that the third write data is the latest data that is written to the first logical block address.

11. A storage system (100), comprising:
at least a first server and a second server, each server being assigned with a different storage location;
a deduplication database (30); and virtual address database (40);
wherein the first server is configured to:
receive a first write
command that includes a first write data that is associated with a first logical block address, assigned to the first server;
compute the first hash value based on the first write data;
determine whether the first hash value is already associated with an existing virtual address entry in a deduplication database, wherein the deduplication database is configured to store a plurality of hash value entries, each one of the entries being uniquely associated with a certain hash value, the hash value being mapped to a specific virtual address reference key, and in case the deduplication database (30) does not include a virtual address entry which is associated with the first hash value:
add to the deduplication database (30) an entry which is uniquely associated with the first hash value and which references a first
virtual address reference key; the first virtual reference key being a combination of the first logical block address and a first deduplication ID reserved by the first server, wherein deduplication IDs are assigned such that within the scope of each logical block address each deduplication ID is unique;
add to the virtual address database (40) a first virtual address entry for the first write data, including:
the first virtual address reference key; a reference counter indicating the number of virtual address entries which reference the first virtual address entry;
a first pointer pointing to a storage location on a storage device of a the storage system where the first write data is stored;
a validity indicator indicating whether the first write data is the latest data that is written to the first logical block address;
wherein the second server is configured to:
receive a second write command including a second write data that is associated with a second logical block address assigned to the second server; compute a second hash value based on the write data;
determine whether the second hash value is already associated with an existing virtual address entry in the deduplication database (30), and if it is associated with the first virtual address entry add to the virtual address database (40) a second virtual address entry for the second write data, including:
a second virtual address reference key which includes the logical block address;
a second pointer pointing to the first virtual address entry .

12. The system according to claim 11, wherein the number of virtual addresses which are associated with the first virtual address entry includes the first virtual address entry itself and any virtual address entry which references the first virtual address entry.

13. The system according to claim 11, wherein the second virtual address reference key does not include a deduplication ID or includes a null deduplication ID.

14. The system according to claim 11, wherein the first server is further configured to increment the reference counter of the existing first virtual address entry to indicate that the second virtual address entry is now associated with the existing first virtual address entry.

15. The system according to claim 11, wherein in case it is determined that the second hash value is already associated with an existing first virtual address entry, the second server is configured to assume that the second write data is identical to the first write data that is associated with the existing first virtual address entry.

16. The system according to any one of claims 11 to 15 wherein the second server is configured, in case it is determined that the second hash value is already associated with the first virtual address entry, to:
determine whether the second write data and the first write data are identical, and if they are not identical, determine that there is a deduplication collision involving the second write data.

17. The system according to claim 16 wherein in case it is determined that there is a deduplication collision involving the second write data, the second server is configured to provide a second virtual address entry for the second write data, including:
a virtual address reference key which includes the second logical block address and an invalid-deduplication indication;
a pointer pointing to a storage location where the second write data is stored.

18. The system according to any one of claims 11 to 17 wherein the first server is configured to receive a third write command including a third write data that is associated with the first logical block address, and in respect of the third write data, the first server is configured to:
compute a third hash value based on the third write data;
determine whether the third hash value is already associated with an existing virtual address entry, and if not:
add to the deduplication database (30) an entry which is uniquely associated with the third hash value and which references a third
virtual address reference key; the third virtual reference key being a combination of the first logical block address and a third deduplication ID reserved by the first server, wherein the third deduplication ID is different from the first deduplication ID;
maintain the first virtual address entry in the virtual address database; and update the validity indicator of the first virtual address entry to indicate that the first write data is not the latest data that is written to the first logical block address.

19. The system according to claim 18 wherein the first server is further adapted to include in the third virtual address entry the third virtual address reference key; and a validity indicator indicating that the third write data is the latest data that is written to the first logical block address.

20. A computer readable medium comprising instructions to cause the system according to claim 11 to carry out the method according to any one of claims 1 to 10.

## Patentansprüche

1. Verfahren zum Verwalten von Deduplizierung in einem Speichersystem (100), umfassend mindestens einen ersten Server und einen zweiten Server, wobei jedem Server ein anderer Speicherort zugewiesen ist, das Verfahren umfassend:
auf dem ersten Server:
Empfangen eines ersten Schreibbefehls, der erste Schreibdaten beinhaltet, die mit einer ersten logischen Blockadresse assoziiert sind, die dem ersten Server zugewiesen ist;
in Bezug auf die ersten Schreibdaten:
Berechnen eines ersten Hash-Werts basierend auf den ersten Schreibdaten;
Bestimmen, ob der erste Hash-Wert bereits mit einem existierenden virtuellen Adresseintrag in einer Deduplizierungsdatenbank assoziiert ist, wobei die Deduplizierungsdatenbank konfiguriert ist, um eine Vielzahl von Hash-Wert-Einträgen zu speichern, wobei jeder der Einträge eindeutig mit einem bestimmten Hash-Wert assoziiert ist, wobei der Hash-Wert zu einem spezifischen virtuellen Adressreferenzschlüssel gemappt ist, und wenn die Deduplizierungsdatenbank (30) keinen virtuellen Adresseintrag beinhaltet, der mit dem ersten Hash-Wert assoziiert ist:
Hinzufügen, zu der Deduplizierungsdatenbank (30), eines Eintrags, der eindeutig mit dem ersten Hash-Wert assoziiert ist und der einen ersten virtuellen Adressreferenzschlüssel referenziert; wobei der erste virtuelle Referenzschlüssel eine Kombination aus der ersten logischen Blockadresse und einer ersten Deduplizierungs-ID ist, die von dem ersten Server reserviert wird, wobei Deduplizierungs-IDs zugewiesen werden, sodass jede Deduplizierungs-ID innerhalb des Bereichs von jeder logischen Blockadresse eindeutig ist; Hinzufügen, zu einer virtuellen Adressdatenbank (40) in dem Speichersystem (100), eines ersten virtuellen Adresseintrags für die ersten Schreibdaten, einschließlich:
des ersten virtuellen Adressreferenzschlüssel;
eines Referenzzählers, der die Anzahl von virtuellen Adresseinträgen angibt, die den ersten virtuellen Adresseintrag referenzieren;
eines ersten Zeigers, der auf einen Speicherplatz auf einer Speichervorrichtung des Speichersystems zeigt, wo die ersten Schreibdaten gespeichert sind;
eines Gültigkeitsindikators, der angibt, ob die ersten Schreibdaten die neuesten Daten sind, die zu der ersten logischen Blockadresse geschrieben sind;
auf dem zweiten Server:
Empfangen eines zweiten Schreibbefehls, der zweite Schreibdaten beinhaltet, die mit einer zweiten logischen Blockadresse assoziiert sind, die dem zweiten Server zugewiesen ist;
in Bezug auf die zweiten Schreibdaten:
Berechnen eines zweiten Hash-Werts basierend auf den zweiten Schreibdaten;
Bestimmen, ob der zweite Hash-Wert bereits mit einem existierenden virtuellen Adresseintrag in der Deduplizierungsdatenbank (30) assoziiert ist, und wenn er mit dem ersten virtuellen Adresseintrag assoziiert ist,
Hinzufügen, zu der virtuellen Adressdatenbank (40), eines zweiten virtuellen Adresseintrags für die zweiten Schreibdaten, einschließlich:
eines zweiten virtuellen Adressreferenzschlüssels, der die zweite logische Blockadresse beinhaltet; und
eines zweiten Zeigers, der auf den ersten virtuellen Adresseintrag zeigt.

2. Verfahren nach Anspruch 1, wobei die Anzahl virtueller Adressen, die mit dem ersten virtuellen Adresseintrag assoziiert sind, den ersten virtuellen Adresseintrag an sich und jeden virtuellen Adresseintrag, der den ersten virtuellen Adresseintrag referenziert, beinhaltet.

3. Verfahren nach Anspruch 1, ferner umfassend ein Bestimmen, ob die zweiten Schreibdaten und die ersten Schreibdaten identisch sind, und nur wenn dies der Fall ist, Ausführen des Hinzufügens des zweiten virtuellen Adresseintrags, der den zweiten virtuellen Adressreferenzschlüssel und den zweiten Zeiger, der auf den existierenden ersten virtuellen Adresseintrag zeigt, beinhaltet.

4. Verfahren nach Anspruch 1, wobei ein Bestimmen, ob der zweite Hash-Wert bereits mit einem existierenden virtuellen Adresseintrag assoziiert ist, umfasst, dass, wenn bestimmt wird, dass der zweite Hash-Wert mit einem existierenden virtuellen Adresseintrag assoziiert ist, angenommen wird, dass die zweiten Schreibdaten identisch wie die Schreibdaten sind, die mit dem existierenden virtuellen Adresseintrag assoziiert sind, und dadurch das Implementieren des Bereitstellens eines zweiten virtuellen Adresseintrags.

5. Verfahren nach Anspruch 1, ferner umfassend ein Inkrementieren des Referenzzählers des ersten virtuellen Adresseintrags, um anzugeben, dass der zweite virtuelle Adresseintrag nun mit dem ersten virtuellen Adresseintrag assoziiert ist.

6. Verfahren nach Anspruch 5, wobei der zweite virtuelle Adressreferenzschlüssel keine Deduplizierungs-ID oder eine Null-Deduplizierungs-ID beinhaltet.

7. Verfahren nach Anspruch 1, ferner umfassend:
vor Hinzufügen des zweiten virtuellen Adresseintrags zu der virtuellen Adressdatenbank (40), Bestimmen, ob die zweiten Schreibdaten und die ersten Schreibdaten identisch sind, und, wenn die zweiten Schreibdaten und die ersten Schreibdaten nicht identisch sind, Angeben, dass es eine Deduplizierungskollision gibt, die die zweiten Schreibdaten involviert.

8. Verfahren nach Anspruch 7, ferner umfassend:
als Reaktion auf ein Erkennen der Deduplizierungskollision Bereitstellen eines zweiten virtuellen Adresseintrags für die zweiten Schreibdaten, einschließlich:
eines zweiten virtuellen Adressreferenzschlüssels, der die zweite logische Blockadresse und eine Angabe einer ungültigen Duplikation beinhaltet;
eines zweiten Zeigers, der auf einen Speicherplatz zeigt, wo die zweiten Schreibdaten gespeichert sind.

9. Verfahren nach einem der vorherigen Ansprüche, ferner umfassend:
auf dem ersten Server:
Empfangen eines dritten Schreibbefehls, der dritte Schreibdaten beinhaltet, die mit der ersten logischen Blockadresse assoziiert sind;
Berechnen eines dritten Hash-Werts basierend auf den dritten Schreibdaten;
bestimmen, ob der dritte Hash-Wert bereits mit einem existierenden virtuellen Adresseintrag in der Deduplizierungsdatenbank assoziiert ist, und wenn nicht: Beibehalten des ersten virtuellen Adresseintrags in der virtuellen Adressdatenbank;
Hinzufügen, zu der Deduplizierungsdatenbank (30), eines Eintrags, der eindeutig mit dem dritten Hash-Wert assoziiert ist und der einen dritten virtuellen Adressreferenzschlüssel referenziert; wobei der dritte virtuelle Referenzschlüssel eine Kombination aus der ersten logischen Blockadresse und einer dritten Deduplizierungs-ID ist, die von dem ersten Server reserviert wurde, wobei sich die dritte Deduplizierungs-ID von der ersten Deduplizierungs-ID unterscheidet;
Hinzufügen, zu der virtuellen Adressdatenbank (40) in dem Speichersystem (100), eines dritten virtuellen Adresseintrags für die dritten Schreibdaten; und
Aktualisieren des Gültigkeitsindikators des ersten virtuellen Adresseintrags, um anzugeben, dass die ersten Schreibdaten nicht die neuesten Daten sind, die in die erste logische Blockadresse geschrieben sind.

10. Verfahren nach Anspruch 9, wobei der dritte virtuelle Adresseintrag Folgendes beinhaltet:
den dritten virtuellen Adressreferenzschlüssel, einen Referenzzähler, der die Anzahl von virtuellen Adresseinträgen angibt, die den dritten virtuellen Adresseintrag referenzieren; einen dritten Zeiger, der auf einen Speicherplatz auf einer Speichervorrichtung des Speichersystems zeigt, wo die dritten Schreibdaten gespeichert sind; und einen Gültigkeitsindikator, der angibt, dass die dritten Schreibdaten die neuesten Daten sind, die zu der ersten logischen Blockadresse geschrieben sind.

11. Speichersystem (100), umfassend:
mindestens einen ersten Server und einen zweiten Server, wobei jedem Server ein anderer Speicherort zugewiesen ist;
eine Deduplizierungsdatenbank (30); und virtuelle Adressdatenbank (40);
wobei der erste Server zu Folgendem konfiguriert ist:
Empfangen eines ersten Schreibbefehls, der erste Schreibdaten beinhaltet, die mit einer ersten logischen Blockadresse assoziiert sind, die dem ersten Server zugewiesen ist;
Berechnen des ersten Hash-Werts basierend auf den ersten Schreibdaten;
Bestimmen, ob der erste Hash-Wert bereits mit einem existierenden virtuellen Adresseintrag in einer Deduplizierungsdatenbank assoziiert ist, wobei die Deduplizierungsdatenbank konfiguriert ist, um eine Vielzahl von Hash-Wert-Einträgen zu speichern, wobei jeder der Einträge eindeutig mit einem bestimmten Hash-Wert assoziiert ist, wobei der Hash-Wert zu einem spezifischen virtuellen Adressreferenzschlüssel gemappt ist, und wenn die Deduplizierungsdatenbank (30) keinen virtuellen Adresseintrag beinhaltet, der mit dem ersten Hash-Wert assoziiert ist:
Hinzufügen, zu der Deduplizierungsdatenbank (30), eines Eintrags, der eindeutig mit dem ersten Hash-Wert assoziiert ist und der einen ersten virtuellen Adressreferenzschlüssel referenziert; wobei der erste virtuelle Referenzschlüssel eine Kombination aus der ersten logischen Blockadresse und einer ersten Deduplizierungs-ID ist, die von dem ersten Server reserviert wird, wobei Deduplizierungs-IDs zugewiesen werden, sodass jede Deduplizierungs-ID innerhalb des Bereichs von jeder logischen Blockadresse eindeutig ist;
Hinzufügen, zu der virtuellen Adressdatenbank (40), eines ersten virtuellen Adresseintrags für die ersten Schreibdaten, einschließlich:
des ersten Referenzschlüssels für die virtuelle Adresse; eines Referenzzählers, der die Anzahl von virtuellen Adresseinträgen angibt, die den ersten virtuellen Adresseintrag referenzieren;
eines ersten Zeigers, der auf einen Speicherplatz auf einer Speichervorrichtung eines des Speichersystems zeigt, wo die ersten Schreibdaten gespeichert sind;
eines Gültigkeitsindikators, der angibt, ob die ersten Schreibdaten die neuesten Daten sind, die zu der ersten logischen Blockadresse geschrieben sind;
wobei der zweite Server zu Folgendem konfiguriert ist:
Empfangen eines zweiten Schreibbefehls, der zweite Schreibdaten beinhaltet, die mit einer zweiten logischen Blockadresse assoziiert sind, die dem zweiten Server zugewiesen ist; Berechnen eines zweiten Hash-Werts basierend auf den Schreibdaten;
Bestimmen, ob der zweite Hash-Wert bereits mit einem existierenden virtuellen Adresseintrag in der Deduplizierungsdatenbank (30) assoziiert ist, und wenn er mit dem ersten virtuellen Adresseintrag assoziiert ist, Hinzufügen eines zweiten virtuellen Adresseintrags für die zweiten Schreibdaten zu der virtuellen Adressdatenbank (40), einschließlich:
eines zweiten virtuellen Adressreferenzschlüssels, der die logische Blockadresse beinhaltet;
eines zweiten Zeigers, der auf den ersten virtuellen Adresseintrag zeigt.

12. System nach Anspruch 11, wobei die Anzahl virtueller Adressen, die mit dem ersten virtuellen Adresseintrag assoziiert sind, den ersten virtuellen Adresseintrag an sich und jeden virtuellen Adresseintrag, der den ersten virtuellen Adresseintrag referenziert, beinhaltet.

13. System nach Anspruch 11, wobei der zweite virtuelle Adressreferenzschlüssel keine Deduplizierungs-ID oder eine Null-Deduplizierungs-ID beinhaltet.

14. System nach Anspruch 11, wobei der erste Server ferner konfiguriert ist, um den Referenzzähler des existierenden ersten virtuellen Adresseintrags zu inkrementieren, um anzugeben, dass der zweite virtuelle Adresseintrag nun mit dem existierenden ersten virtuellen Adresseintrag assoziiert ist.

15. System nach Anspruch 11, wobei, wenn bestimmt wird, dass der zweite Hash-Wert bereits mit einem existierenden ersten virtuellen Adresseintrag assoziiert ist, der zweite Server konfiguriert ist, um anzunehmen, dass die zweiten Schreibdaten identisch wie die ersten Schreibdaten sind, die mit dem existierenden ersten virtuellen Adresseintrag assoziiert sind.

16. System nach einem der Ansprüche 11 bis 15, wobei der zweite Server, wenn bestimmt wird, dass der zweite Hash-Wert bereits mit dem ersten virtuellen Adresseintrag assoziiert ist, zu Folgendem konfiguriert ist:
Bestimmen, ob die zweiten Schreibdaten und die ersten Schreibdaten identisch sind, und wenn sie nicht identisch sind, Bestimmen, dass es eine Deduplizierungskollision gibt, die die zweiten Schreibdaten involviert.

17. System nach Anspruch 16, wobei, wenn bestimmt wird, dass es eine Deduplizierungskollision mit den zweiten Schreibdaten gibt, der zweite Server konfiguriert ist, um einen zweiten virtuellen Adresseintrag für die zweiten Schreibdaten bereitzustellen, einschließlich:
eines virtuellen Adressreferenzschlüssels, der die zweite logische Blockadresse und eine Angabe einer ungültigen Duplikation beinhaltet;
eines Zeigers, der auf einen Speicherplatz zeigt, wo die zweiten Schreibdaten gespeichert sind.

18. System nach einem der Ansprüche 11 bis 17, wobei der erste Server konfiguriert ist, um einen dritten Schreibbefehl zu empfangen, der dritte Schreibdaten beinhaltet, die mit der ersten logischen Blockadresse assoziiert sind, und der erste Server in Bezug auf die dritten Schreibdaten zu Folgendem konfiguriert ist:
Berechnen eines dritten Hash-Werts basierend auf den dritten Schreibdaten;
Bestimmen, ob der dritte Hash-Wert bereits mit einem existierenden virtuellen Adresseintrag assoziiert ist, und wenn nicht:
Hinzufügen, zu der Deduplizierungsdatenbank (30), eines Eintrags, der eindeutig mit dem dritten Hash-Wert assoziiert ist und der einen dritten virtuellen Adressreferenzschlüssel referenziert; wobei der dritte virtuelle Referenzschlüssel eine Kombination aus der ersten logischen Blockadresse und einer dritten Deduplizierungs-ID ist, die von dem ersten Server reserviert wurde, wobei sich die dritte Deduplizierungs-ID von der ersten Deduplizierungs-ID unterscheidet;
Beibehalten des ersten virtuellen Adresseintrags in der virtuellen Adressdatenbank; und
Aktualisieren des Gültigkeitsindikators des ersten virtuellen Adresseintrags, um anzugeben, dass die ersten Schreibdaten nicht die neuesten Daten sind, die in die erste logische Blockadresse geschrieben sind.

19. System nach Anspruch 18, wobei der erste Server ferner angepasst ist, um in dem dritten virtuellen Adresseintrag den dritten virtuellen Adressreferenzschlüssel; und einen Gültigkeitsindikator zu beinhalten, der angibt, dass die dritten Schreibdaten die neuesten Daten sind, die zu der ersten logischen Blockadresse geschrieben sind.

20. Computerlesbares Medium umfassend Anweisungen, um das System nach Anspruch 11 zu veranlassen, das Verfahren nach einem der Ansprüche 1 bis 10 durchzuführen.

## Revendications

1. Procédé de gestion de la déduplication, dans un système de stockage (100) comprenant au moins un premier serveur et un deuxième serveur, chaque serveur étant attribué à un emplacement de stockage différent, le procédé comprenant :
au niveau du premier serveur :
la réception d'une première commande d'écriture qui comprend des premières données d'écriture qui sont associées à une première adresse de bloc logique attribuée au premier serveur ;
en ce qui concerne les premières données d'écriture :
le calcul d'une première valeur de hachage sur la base des premières données d'écriture ;
la détermination si la première valeur de hachage est déjà associée à une entrée d'adresse virtuelle existante dans une base de données de déduplication, dans lequel la base de données de déduplication est configurée pour stocker une pluralité d'entrées de valeur de hachage, chacune des entrées étant associée de manière unique à une certaine valeur de hachage, la valeur de hachage étant mappée à une clé de référence d'adresse virtuelle spécifique, et dans le cas où la base de données de déduplication (30) n'inclut pas d'entrée d'adresse virtuelle qui est associée à la première valeur de hachage :
l'ajout à la base de données de déduplication (30) d'une entrée qui est associée de manière unique à la première valeur de hachage et qui fait référence à une première clé de référence d'adresse virtuelle ; la première clé de référence virtuelle étant une combinaison de la première adresse de bloc logique et d'un premier ID de déduplication réservé par le premier serveur, dans lequel des ID de déduplication sont attribués de telle sorte que dans la portée de chaque adresse de bloc logique, chaque ID de déduplication soit unique ;
l'ajout à une base de données d'adresses virtuelles (40) dans le système de stockage (100) d'une première entrée d'adresse virtuelle pour les premières données d'écriture, comprenant :
la première clé de référence d'adresse virtuelle ;
un compteur de référence indiquant le nombre d'entrées d'adresse virtuelle qui référencent la première entrée d'adresse virtuelle ;
un premier pointeur pointant vers un emplacement de stockage sur un dispositif de stockage du système de stockage où les premières données d'écriture sont stockées ;
un indicateur de validité indiquant si les premières données d'écriture sont les dernières données qui sont écrites sur la première adresse de bloc logique ;
au niveau du deuxième serveur :
la réception d'une deuxième commande d'écriture comprenant des deuxièmes donnée d'écriture qui sont associées à une deuxième adresse de bloc logique attribuée au deuxième serveur ;
en ce qui concerne les deuxièmes données d'écriture :
le calcul d'une deuxième valeur de hachage sur la base des deuxièmes données d'écriture ;
la détermination si la deuxième valeur de hachage est déjà associée à une entrée d'adresse virtuelle existante dans la base de données de déduplication (30), et si elle est associée à la première entrée d'adresse virtuelle,
l'ajout à la base de données d'adresses virtuelles (40) d'une deuxième entrée d'adresse virtuelle pour les deuxièmes données d'écriture, comprenant :
une deuxième clé de référence d'adresse virtuelle qui comprend la deuxième adresse de bloc logique ; et
un deuxième pointeur pointant vers la première entrée d'adresse virtuelle.

2. Procédé selon la revendication 1, dans lequel le nombre d'adresses virtuelles qui sont associées à la première entrée d'adresse virtuelle comprend la première entrée d'adresse virtuelle elle-même et toute entrée d'adresse virtuelle qui fait référence à la première entrée d'adresse virtuelle.

3. Procédé selon la revendication 1, comprenant en outre la détermination si les deuxièmes données d'écriture et les premières données d'écriture sont identiques, et seulement si elles le sont, l'exécution de l'ajout de la deuxième entrée d'adresse virtuelle comprenant la deuxième clé de référence d'adresse virtuelle et du deuxième pointeur qui pointe vers la première entrée d'adresse virtuelle existante.

4. Procédé selon la revendication 1, dans lequel la détermination si la deuxième valeur de hachage est déjà associée à une entrée d'adresse virtuelle existante, comprend, s'il est déterminé que la deuxième valeur de hachage est associée à une entrée d'adresse virtuelle existante, la supposition que les deuxièmes données d'écriture sont identiques aux données d'écriture qui sont associées à l'entrée d'adresse virtuelle existante, et ainsi la mise en œuvre de ladite fourniture d'une deuxième entrée d'adresse virtuelle.

5. Procédé selon la revendication 1, comprenant en outre l'incrémentation du compteur de référence de la première entrée d'adresse virtuelle pour indiquer que la deuxième entrée d'adresse virtuelle est maintenant associée à la première entrée d'adresse virtuelle.

6. Procédé selon la revendication 5, dans lequel la deuxième clé de référence d'adresse virtuelle n'inclut pas d'ID de déduplication ou comprend un ID de déduplication nul.

7. Procédé selon la revendication 1 comprenant en outre :
avant l'ajout à la base de données d'adresses virtuelles (40) de la deuxième entrée d'adresse virtuelle, la détermination si les deuxièmes données d'écriture et les premières données d'écriture sont identiques et dans le cas où les deuxièmes données d'écriture et les premières données d'écriture ne sont pas identiques, l'indication qu'il y a une collision de déduplication impliquant les deuxièmes données d'écriture.

8. Procédé selon la revendication 7 comprenant en outre :
en réponse à la détection de la collision de déduplication, la fourniture d'une deuxième entrée d'adresse virtuelle pour les deuxièmes données d'écriture, comprenant :
une deuxième clé de référence d'adresse virtuelle qui comprend la deuxième adresse de bloc logique et une indication de déduplication invalide ;
un deuxième pointeur pointant vers un emplacement de stockage où les deuxièmes données d'écriture sont stockées.

9. Procédé selon l'une quelconque des revendications précédentes, comprenant en outre :
au niveau du premier serveur :
la réception d'une troisième commande d'écriture comprenant des troisièmes données d'écriture qui sont associées à la première adresse de bloc logique ;
le calcul d'une troisième valeur de hachage sur la base des troisièmes données d'écriture ;
la détermination si la troisième valeur de hachage est déjà associée à une entrée d'adresse virtuelle existante dans la base de données de déduplication, et si ce n'est pas le cas : le maintien de la première entrée d'adresse virtuelle dans la base de données d'adresses virtuelles ;
l'ajout à la base de données de déduplication (30) d'une entrée qui est associée de manière unique à la troisième valeur de hachage et qui fait référence à une troisième clé de référence d'adresse virtuelle ; la troisième clé de référence virtuelle étant une combinaison de la première adresse de bloc logique et d'un troisième ID de déduplication réservé par le premier serveur, dans lequel le troisième ID de déduplication est différent du premier ID de déduplication ;
l'ajout à la base de données d'adresses virtuelles (40) dans le système de stockage (100) d'une troisième entrée d'adresse virtuelle pour les troisièmes données d'écriture ; et
la mise à jour de l'indicateur de validité de la première entrée d'adresse virtuelle pour indiquer que les premières données d'écriture ne sont pas les dernières données qui sont écrites sur la première adresse de bloc logique.

10. Procédé selon la revendication 9, dans lequel ladite troisième entrée d'adresse virtuelle comprend :
la troisième clé de référence d'adresse virtuelle, un compteur de référence indiquant le nombre d'entrées d'adresse virtuelle qui référencent la troisième entrée d'adresse virtuelle ; un troisième pointeur pointant vers un emplacement de stockage sur un dispositif de stockage du système de stockage où les troisièmes données d'écriture sont stockées ; et un indicateur de validité indiquant que les troisièmes données d'écriture sont les dernières données qui sont écrites dans la première adresse de bloc logique.

11. Système de stockage (100), comprenant :
au moins un premier serveur et un deuxième serveur, chaque serveur étant attribué à un emplacement de stockage différent ;
une base de données de déduplication (30) ; et une base de données d'adresses virtuelles (40) ;
dans lequel le premier serveur est configuré pour :
recevoir une première commande d'écriture qui comprend des premières données d'écriture associées à une première adresse de bloc logique, attribuée au premier serveur ;
calculer la première valeur de hachage sur la base des premières données d'écriture ;
déterminer si la première valeur de hachage est déjà associée à une entrée d'adresse virtuelle existante dans une base de données de déduplication, dans lequel la base de données de déduplication est configurée pour stocker une pluralité d'entrées de valeur de hachage, chacune des entrées étant associée de manière unique à une certaine valeur de hachage, la valeur de hachage étant mappée à une clé de référence d'adresse virtuelle spécifique, et dans le cas où la base de données de déduplication (30) n'inclut pas une entrée d'adresse virtuelle qui est associée à la première valeur de hachage :
ajouter à la base de données de déduplication (30) une entrée qui est associée de manière unique à la première valeur de hachage et qui fait référence à une première clé de référence d'adresse virtuelle ; la première clé de référence virtuelle étant une combinaison de la première adresse de bloc logique et d'un premier ID de déduplication réservé par le premier serveur, les ID de déduplication étant attribués de telle sorte que dans la portée de chaque adresse de bloc logique, chaque ID de déduplication soit unique ;
ajouter à la base de données d'adresses virtuelles (40) une première entrée d'adresse virtuelle pour les premières données d'écriture, comprenant :
la première clé de référence d'adresse virtuelle ; un compteur de référence indiquant le nombre d'entrées d'adresse virtuelle qui référencent la première entrée d'adresse virtuelle ;
un premier pointeur pointant vers un emplacement de stockage sur un dispositif de stockage du système de stockage où les premières données d'écriture sont stockées ;
un indicateur de validité indiquant si les premières données d'écriture sont les dernières données qui sont écrites sur la première adresse de bloc logique ;
dans lequel le deuxième serveur est configuré pour :
recevoir une deuxième commande d'écriture comprenant des deuxièmes données d'écriture qui sont associées à une deuxième adresse de bloc logique attribuée au deuxième serveur ; calculer une deuxième valeur de hachage sur la base des données d'écriture ;
déterminer si la deuxième valeur de hachage est déjà associée à une entrée d'adresse virtuelle existante dans la base de données de déduplication (30), et si elle est associée à la première entrée d'adresse virtuelle, ajouter à la base de données d'adresses virtuelles (40) une deuxième entrée d'adresse virtuelle pour les deuxièmes données d'écriture, comprenant :
une deuxième clé de référence d'adresse virtuelle qui comprend l'adresse de bloc logique ; un deuxième pointeur pointant vers la première entrée d'adresse virtuelle.

12. Système selon la revendication 11, dans lequel le nombre d'adresses virtuelles qui sont associées à la première entrée d'adresse virtuelle comprend la première entrée d'adresse virtuelle elle-même et toute entrée d'adresse virtuelle qui fait référence à la première entrée d'adresse virtuelle.

13. Système selon la revendication 11, dans lequel la deuxième clé de référence d'adresse virtuelle ne comprend pas d'ID de déduplication ou comprend un ID de déduplication nul.

14. Système selon la revendication 11, dans lequel le premier serveur est en outre configuré pour incrémenter le compteur de référence de la première entrée d'adresse virtuelle existante pour indiquer que la deuxième entrée d'adresse virtuelle est désormais associée à la première entrée d'adresse virtuelle existante.

15. Système selon la revendication 11, dans lequel dans le cas où il est déterminé que la deuxième valeur de hachage est déjà associée à une première entrée d'adresse virtuelle existante, le deuxième serveur est configuré pour supposer que les deuxièmes données d'écriture sont identiques aux premières données d'écriture qui sont associées à la première entrée d'adresse virtuelle existante.

16. Système selon l'une quelconque des revendications 11 à 15, dans lequel le deuxième serveur est configuré, dans le cas où il est déterminé que la deuxième valeur de hachage est déjà associée à la première entrée d'adresse virtuelle, pour : déterminer si les deuxièmes données d'écriture et les premières données d'écriture sont identiques et, si elles ne sont pas identiques, déterminer qu'il existe une collision de déduplication impliquant les deuxièmes données d'écriture.

17. Système selon la revendication 16, dans lequel, dans le cas où il est déterminé qu'il y a une collision de déduplication impliquant les deuxièmes données d'écriture, le deuxième serveur est configuré pour fournir une deuxième entrée d'adresse virtuelle pour les deuxièmes données d'écriture, comprenant :
une clé de référence d'adresse virtuelle qui comprend la deuxième adresse de bloc logique et une indication de déduplication invalide ;
un pointeur pointant vers un emplacement de stockage où les deuxièmes données d'écriture sont stockées.

18. Système selon l'une quelconque des revendications 11 à 17, dans lequel le premier serveur est configuré pour recevoir une troisième commande d'écriture comprenant une troisième donnée d'écriture qui est associée à la première adresse de bloc logique, et en ce qui concerne les troisièmes données d'écriture, le premier serveur est configuré pour :
calculer une troisième valeur de hachage sur la base des troisièmes données d'écriture ;
déterminer si la troisième valeur de hachage est déjà associée à une entrée d'adresse virtuelle existante, et si ce n'est pas le cas :
ajouter à la base de données de déduplication (30) une entrée qui est associée de manière unique à la troisième valeur de hachage et qui fait référence à une troisième clé de référence d'adresse virtuelle ; la troisième clé de référence virtuelle étant une combinaison de la première adresse de bloc logique et d'un troisième ID de déduplication réservé par le premier serveur, dans lequel le troisième ID de déduplication est différent du premier ID de déduplication ;
maintenir la première entrée d'adresse virtuelle dans la base de données d'adresses virtuelles ; et
mettre à jour l'indicateur de validité de la première entrée d'adresse virtuelle pour indiquer que les premières données d'écriture ne sont pas les dernières données écrites sur la première adresse de bloc logique.

19. Système selon la revendication 18, dans lequel le premier serveur est en outre adapté pour inclure dans la troisième entrée d'adresse virtuelle la troisième clé de référence d'adresse virtuelle ; et un indicateur de validité indiquant que les troisièmes données d'écriture sont les dernières données qui sont écrites sur la première adresse de bloc logique.

20. Support lisible par ordinateur comprenant des instructions pour amener le système selon la revendication 11 à exécuter le procédé selon l'une quelconque des revendications 1 à 10.
